# EUROPEAN PATENT APPLICATION

(11) **EP 2 679 721 A1**
(43) Date of publication of application: **01.01.2014**
(21) Application number: 12173581.5
(22) Date of filing: 26.06.2012
(51) Int. Cl.: D21F 3/08, D21G 1/02, G01L 5/00

(54) **Sensor arrangement and a roll of a fiber web production line**

(71) Applicant: Metso Paper Inc., 00130 Helsinki (FI)
(72) Inventor: Pitkänen, Tatu, FI-04460 Nummenkylä (FI); Srinivasan, Balaji, Bellevue, WA Washington 98008 (US); Nieminen, Kaale, FI-40340 Jyväskylä (FI); Huuskonene, Reijo, FI-41900 Petäjävesi (FI); Nylund, Markus, FI-01370 Vantaa (FI)
(74) Representative: Berggren Oy Ab

(57) **Abstract**

The invention relates to a sensor arrangement for measuring the nip profile of a nip formed between a roll (12) of a fiber web production line and its counter roll. The sensor (21) is a piezo sensor of coaxial cable type. The invention also relates to a roll of a fiber web production line comprising a body and an elastic cover on the body and at least one sensor (21) embedded in the cover for measuring nip profile of the nip formed between the roll and its counter roll in a fiber web production line. The sensor is a piezo sensor of coaxial cable type.

## Description

The invention relates to a sensor arrangement for measuring nip profile of a nip formed between a roll of a fiber web production line and its counter roll and to a roll of a fiber web machine.

It is known that fiber web, for example paper or board web is manufactured in machines which together constitute a manufacturing line which can be hundreds of meters long. For example modern paper machines can produce over 450,000 tons of paper per year. The speed of the paper machine can exceed 2,000 m/min and the width of the paper web can be more than 11 meters.

As known from the prior art fiber web producing process i.e. manufacturing lines typically comprise an assembly formed by a number of apparatuses arranged consecutively in the process line. A typical production and treatment line comprises a head box, a wire section and a press section as well as a subsequent drying section and a reel-up. The production and treatment line can further comprise other devices and sections for finishing the fiber web, for example, a sizer, a calender, a coating section. The production and treatment line also comprises at least one winder for forming customer rolls as well as a roll packaging apparatus. In this description and the following claims by the term "fiber web" is meant paper, board, tissue and pulp webs or the like.

In a fiber web producing line rolls are used in several different positions. Rolls that form a nip can also be found in various parts of the fiber web producing line. A nip is formed in between two elements, typically between two rolls but also the nip can be formed with a roll, a belt, a shoe or a corresponding element and a counter-element of corresponding or different kind, often at least one of the nip forming elements is a roll. The fiber web is passed through the nip either unsupported or supported by a belt, a felt, a wire or any other transporting fabric. In the nip the fiber web is pressed by the nip pressure in order to remove water from the web or to effect to the properties of the web. Typical nips of a fiber web production line are press nips in which water is removed, calendar nips in which the web is threated for example to achieve certain surface properties such as gloss, reeling and winding nips in which the nip effect is used for the reeling/winding of the fiber web. For controlling and adjusting the nip pressure / nip profile sensor means are needed for measurement results based on which the control and adjustment operations can be done.

In WO publication 2006075056 is disclosed an on-line measurement arrangement of a pressure profile of prior art. In the disclosed method for measuring the nip pressure and/or pressure profile a nip-forming roll is fitted with an EMFi-film pressure sensor under a coating layer which is protective and functions as a spring on top of the sensor, and the nip pressure delivers to the bottom surface of the coating a deformation proportional to the nip pressure and the deformation compresses the sensor which respond to the deformation by generating an electric signal. One disadvantage in connection with the EMFi-film pressure sensors is their low thermal tolerance, which set limits to utilization and also to selection of coating materials for the roll due temperatures required for coating.

Another sensor type of prior art are PVDF (polyvinyl dene fluoride) - strips but their mechanical structure is weak and joining of the strips to each other is difficult.

In WO publication 2011/005423 is disclosed an industrial roll with sensors having conformable conductive sheets. This roll according to prior art includes a substantially cylindrical core having an outer surface and an internal lumen, polymeric cover circumferentially overlying the core outer surface, and a sensing system, which include a plurality of sensors at least partially embedded in the cover, the sensors configured to sense an operating parameter of the roll and provide signals related to the operating parameter and a processor operatively associated with the sensors that processes signals provided by the sensors . Each of the plurality of sensors includes a first electrode overlying the top surface of the substrate and the second electrode underlies only a portion of the bottom surface of the substrate, thereby forming a gap adjacent the bottom surface and a side surface of the substrate, a first sheet of conductive material attached to the first electrode and the side surface of the substrate and extended in a first direction away from the bottom surface of the substrate and a s second sheet of conductive material attached to the second electrode and extended in a second direction away from the bottom surface of the substrate, the second surface being opposite the first direction. One disadvantage with this kind of arrangement is that the amount of measurement points of a profile equals to the amount of sensors, which is up to 20. This amount is further limited by the fact that with too many sensors the likelihood of two or more of sensors being in the nip simultaneously is remarkably increased which will lead to misleading measuring results.

In connection with nip profile measurements it has been noted by the applicant that the electrical disturbances affect the measurement results. In fiber web production, especially in calenders, it is to be expected that big disturbances occur in the measurement results due to discharges of induced electricity. In cases where a prior art type measurement roll with plurality of discontinuous sensors with several measurement points are used peaks of discharging induced electricity may induce to conductors and cause disturbances. In cases where a prior art type measurement roll with continuous EMFi-type sensor is used the risk of disturbances is lower due to negative layers protecting on both sides but even there the edges may pass through disturbances to some extent.

An object of the invention is to create a sensor arrangement and a roll of a fiber web production line in which the disadvantages and problems of prior art are eliminated or at least minimized.

In order to achieve the above mentioned object and those that are discussed later the sensor arrangement is mainly characterized by the features of the characterizing part of claim 1.

The sensor arrangement for measuring nip profile according to the invention is continuous and thus provides for continuous profile measurement with at least 200 measurement points without need to provide the roll with 200 separate sensors and without the risk of electrical disturbances affecting the measurement results.

According to the invention the sensor for measuring nip profile of a nip formed between a roll of a fiber web production line and its counter roll for measuring the nip profile is a piezo sensor of coaxial cable type.

Advantageously the sensor for the roll has a coaxial cable type structure comprising a signal conductor as core, a coating of active material, for example of PVDF (polyvinyl dene fluoride) or of EMFi (electro mechanical film) or of other piezo type material around the signal conductor, a protecting and grounding layer around the coating of active material and a cover layer of plastic material as the outermost layer and around the protecting and grounding layer. The signal conductor and the active material form the measurement conductor. The protecting and grounding layer protects the signal conductor from electrical disturbances and forms a protecting layer that functions as a "Faraday shield" for the measurement conductor. The outermost cover layer provides the mechanical strength of the sensor which strength can be selected by thickness of the cover layer.

According to an advantageous aspect of the invention the core or the signal conductor of the sensor consists of metallic material, electrically conductive plastic or corresponding electrically conductive material.

According to an advantageous aspect of the invention the sensor arrangement of the roll for a fiber web production line produces energy as the roll rotates. When the sensor passes through the nip during the rotational movement of the roll, its charge level changes thus providing between the positive - negative conductors voltage and current. The energy produced can be used for example for providing energy for the measuring and transmitting electronics at the roll and for charging batteries of the electronics.

According to an advantageous aspect of the invention the sensor is used as an actuator. By input of alternating voltage to the piezo type coaxial cable dimensional variation and thus displacement can be produced. By this way for example counter oscillation / vibration can be produced in the elastic cover of the roll as a response to a measured vibration.

According to an advantageous feature of the invention the sensor is embedded in the elastic cover of the roll.

According to an advantageous feature of the invention the sensor's temperature resistance is up to 150 C°.

The roll according to the invention is mainly characterized by the features of claim 12.

According to the invention the roll of a fiber web production line comprises a body and an elastic cover on the body and at least one sensor embedded in the cover for measuring nip profile of the nip formed between the roll and its counter roll in a fiber web production line, **characterized in, that** the sensor is a piezo sensor of coaxial cable type.

According to an advantageous feature of invention the elastic cover of the roll comprises polymer matrix and reinforcements which reinforcements partly or totally comprise a sensor according to the invention.

According to further advantageous feature of the invention the sensor is in helical position around the length of the roll.

According to further advantageous feature of the invention the sensor is around the roll in circumferential direction.

According to a further advantageous feature of the invention the sensor arrangement of the roll for a fiber web production line is provided for producing energy as the roll rotates, wherein as the sensor passes through the nip during the rotational movement of the roll, its charge level changes thus provides between the positive - negative conductors voltage and current.

According to further advantageous feature of the invention the roll is a pressing roll of a press section of a fiber web production line.

According to further advantageous feature of the invention the roll is a suction press roll having a perforated shell body and the path of the sensor circumvents perforation holes of the perforated shell.

According to further advantageous feature of the invention the roll is a calendering roll of a calender of a fiber web production line.

In the following the invention is explained in detail with reference to the accompanying drawing in which

Figure 1 schematically shows an example of an advantageous sensor structure.

Figures 2 - 3 schematically show examples of advantageous positioning of the sensor arrangement on the roll.

In the figures the same reference signs are used for corresponding parts if not otherwise mentioned.

Advantageously the sensor 21 for the roll has a coaxial cable type structure comprising a signal conductor 22 as core, consisting of an electrically conducting material such as metal or electrically conducting plastics, for example copper with or without silver plating, a coating of active material 23, for example in the form of a film, tape, fiber, wire, net or the like coiled or wrapped around the core 22, for example of PVDF (polyvinyl dene fluoride) or of EMFi (electro mechanical film) or of other piezo type material, a protecting and grounding layer 24 around the active material 23 , consisting of an electrically conducting material such as metal or electrically conducting plastics, in the form of fiber, coil, wire net, bride, tube etc., for example copper bride, and a cover layer 25 of plastic material as the outermost layer around the protecting and grounding layer 24. The signal conductor 22 and the coating of active material 23 form the measurement conductor 22, 23 and the protecting and grounding layer 24 is adapted to protect the signal conductor 22 against electrical disturbances and thus functions as a "Faraday shield" for the measurement conductor 22, 23. The outermost cover layer 25 provides the mechanical strength of the sensor 21 and may comprise for example polyethylene or polypropylene or any electrically non-conductive polymer material generally used in cables. The mechanical strength of the sensor can be selected and adjusted by thickness of the cover layer.

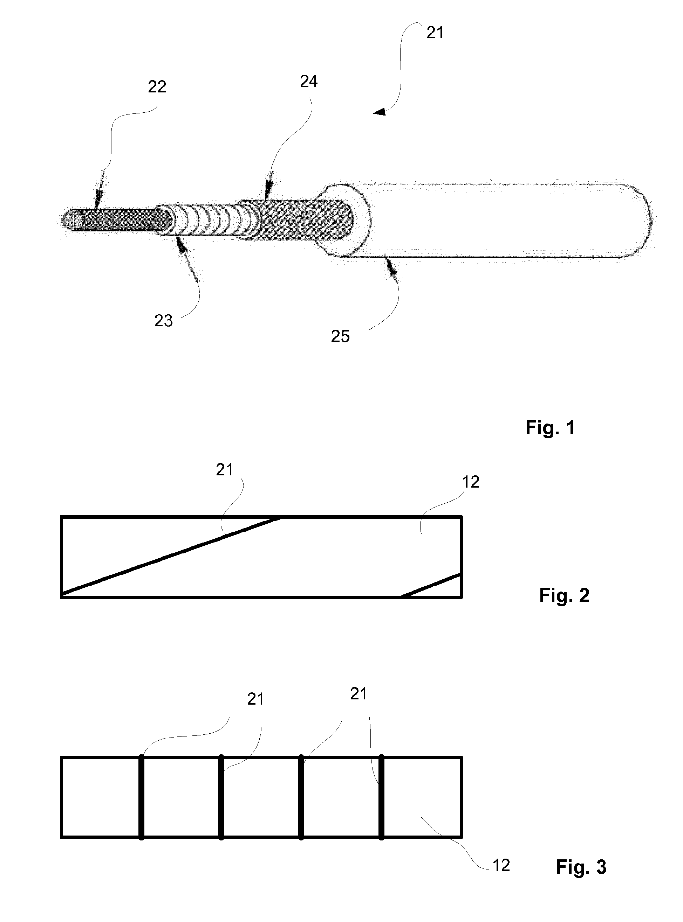

Figures 2 - 3 show advantageous alternatives for installing the sensor 21 on the roll 12. In figure 2 an alternative is shown in which the sensor 21 has been installed helically around the roll passing as a spiral. In the figure 2 the threading of the spiral created by the sensor 21 is coarse and of low pitch but also the spiral with fine thread can be used. In figure 3 an alternative is shown in which the sensors 21 are installed in the direction of the circumference of the roll 12.

Above only some advantageous examples of the invention have been described, it should be understood that many modifications and alterations are possible.

## Claims

1. Sensor arrangement for measuring the nip profile of a nip formed between a roll (12) of a fiber web production line and its counter roll, **characterized in, that** the sensor (21) is a piezo sensor of coaxial cable type.

2. Sensor according to claim 1, **characterized in, that** the sensor (21) comprises a signal conductor (22) as core, a coating of active material (23) around the signal conductor (22), a protecting and grounding layer (24) around the active material (23) and a cover layer (25) of plastic material as the outermost layer around the protecting and grounding layer (24).

3. Sensor according to claim 2, **characterized in, that** the signal conductor (22) and the active material (23) form the measurement conductor.

4. Sensor according to claim 2, **characterized in, that** the protecting and grounding layer (24) is adapted to protect the signal conductor (22) against electrical disturbances.

5. Sensor according to claim 2, **characterized in, that** the outermost cover layer (25) provides mechanical strength of the sensor (21).

6. Sensor according to claim 2, **characterized in, that** the active material (23) of the sensor (21) consists of PVDF (polyvinyl dene fluoride) or of EMFi (electro mechanical film) or of other piezo type material.

7. Sensor according to claim 6, **characterized in, that** the layer of active material is in the form of fiber, tape, film coiled or wrapped around the core (22).

8. Sensor according to claim 2, **characterized in, that** the signal conductor (22) consists of metal, electrically conductive plastic, or corresponding electrically conductive material.

9. Sensor according to claim 1, **characterized in, that** the sensor (21) is an actuator and that by input of alternating voltage to the sensor (21).

10. Sensor according to claim 1, **characterized in, that** the sensor (21) is embedded in an elastic cover of the roll (12).

11. Sensor according to claim 1, **characterized in, that** the sensor's (21) temperature tolerance is up to 150 C°.

12. Roll of a fiber web production line comprising a body and an elastic cover on the body and at least one sensor (21) embedded in the cover for measuring nip profile of the nip formed between the roll and its counter roll in a fiber web production line, **characterized in, that** the sensor is a piezo sensor of coaxial cable type.

13. Roll according to claim 12, **characterized in, that** the elastic cover comprises polymer matrix and reinforcements which reinforcements partly or totally comprise a sensor of claim 1.

14. Roll according to claim 12, **characterized in, that** the sensor (21) is in helical position around the length of the roll (21).

15. Roll according to claim 12, **characterized in, that** the sensor (21) is around the roll in circumferential direction.

16. Roll according to claim 12, **characterized in, that** the sensor (21) arrangement of the roll (12) for a fiber web production line is provided for producing energy as the roll (12) rotates, wherein as the sensor (21) passes through the nip during the rotational movement of the roll (12), its charge level changes thus provides between the positive - negative conductors voltage and current.

17. Roll according to claim 12, **characterized in, that** the roll (12) is a pressing roll of a press section of a fiber web production line.

18. Roll according to claim 12, **characterized in, that** the roll (12) is a suction press roll having a perforated shell body and the path of the sensor circumvents the holes of the perforated shell.

19. Roll according to claim 12, **characterized in, that** the roll (12) is a calendering roll of a calender of a fiber web production line.
